# EUROPEAN PATENT APPLICATION

(11) **EP 4 632 587 A1**
(43) Date of publication of application: **15.10.2025**
(21) Application number: 23909323.0
(22) Date of filing: 08.09.2023
(51) Int. Cl.: G06F 12/1027

(54) **DATA PROCESSING METHOD AND APPARATUS, AND CHIP AND COMPUTER-READABLE STORAGE MEDIUM**

(30) Priority: 27.12.2022 CN 202211687803
(71) Applicant: Huawei Technologies Co., Ltd., Shenzhen, Guangdong 518129 (CN)
(72) Inventor: QIN, Lang, Shenzhen, Guangdong 518129 (CN); YANG, Rui, Shenzhen, Guangdong 518129 (CN); ZHU, Xiaoping, Shenzhen, Guangdong 518129 (CN); CHEN, Huan, Shenzhen, Guangdong 518129 (CN); ZHAO, Bing, Shenzhen, Guangdong 518129 (CN); WANG, Guanhao, Shenzhen, Guangdong 518129 (CN)
(74) Representative: Maiwald GmbH
(86) International application number: PCT/CN2023/117603
(87) International publication number: WO 2024/139385

(57) **Abstract**

A data processing method and apparatus, a chip, and a computer-readable storage medium relate to the computer field, and are provided to improve accuracy of data prefetching and acceleration performance of subsequent data processing. The method is applied to a hybrid memory system including a storage class memory and a dynamic random access memory, and includes: obtaining a first memory access instruction that carries a target virtual address and a target process identification, where the target process identification indicates a process corresponding to the first memory access instruction; querying a mapping table based on the target virtual address and the target process identification, where the mapping table includes a correspondence between at least one virtual address, at least one process identification, and at least one physical address; and if a first physical address corresponding to the target virtual address and the target process identification exists in the mapping table, and the first physical address is included in a physical address range corresponding to the storage class memory, prefetching, to the dynamic random access memory, data of a target memory page corresponding to the first physical address.

## Description

This application claims priority to Chinese Patent Application No. CN202211687803.X, filed with the China National Intellectual Property Administration on December 27, 2022 and entitled "DATA PROCESSING METHOD AND APPARATUS, CHIP, AND COMPUTER-READABLE STORAGE MEDIUM", which is incorporated herein by reference in its entirety.

### TECHNICAL FIELD

This application relates to the communication field, and in particular, to a data processing method and apparatus, a chip, and a computer-readable storage medium.

### BACKGROUND

In a big data era, a large quantity of data-intensive applications emerge, requirements for a capacity and a bandwidth of a memory subsystem are increasing, and a dynamic random access memory (dynamic random access memory, DRAM) accounts for an increasing proportion of a total holding cost of a server. To improve comprehensive cost-effectiveness of a memory system, a hybrid memory system is usually formed using a dynamic random access memory and a storage class memory. Statistics on memory access information needs to be collected, and cold data needs to be transferred to an extended storage medium, and is transferred to the DRAM for access as required.

In an existing data processing method, an access bit (access bit) of a memory page is mainly used to identify hotness of a memory page in a storage class memory, to perform data migration. For example, in a scanning periodicity, if a specific memory page in the storage class memory is accessed, a value of an access bit of the memory page is set to 1. When the memory page is accessed again, because the access bit is set to 1, it is considered that the memory page is a hot memory page, and data in the memory page is prefetched to a dynamic random access memory.

In the foregoing data processing method, the value of the access bit can only indicate whether a specific memory page is accessed in a current scanning periodicity, and determining a cold or hot memory page based only on this is inaccurate, thereby reducing accuracy of data prefetching.

### SUMMARY

This application provides a data processing method and apparatus, a chip, and a computer-readable storage medium. In the data processing method, when a first physical address corresponding to a memory access instruction is determined, and the first physical address is included in a physical address range corresponding to a storage class memory, data of a target memory page corresponding to the first physical address is prefetched to a dynamic random access memory. In other words, a physical address corresponding to the memory access instruction is identified, and a memory page to be accessed is promoted to the dynamic random access memory, so that accuracy of data prefetching and acceleration performance of subsequent data processing are improved.

According to a first aspect, a data processing method is provided. The method is applied to a hybrid memory system. The hybrid memory system includes different types of memories, and specifically includes a storage class memory and a dynamic random access memory. A first memory access instruction is obtained. In a procedure of triggering data access, the data access includes addressing, reading data, writing data, or another step. The first memory access instruction carries a target virtual address (virtual address, VA) and a target process identification (process identification, PID), and the target PID indicates a process corresponding to the first memory access instruction. When a plurality of processes run simultaneously, memory access instructions of different processes can be distinguished by using process identifications, so that an error in a data operation is avoided. Before data is read or data is written, whether a memory area to be accessed is in the SCM and whether a physical address corresponding to the first memory access instruction is a memory pointer are determined, to determine whether data prefetching needs to be performed. Specifically, a mapping table is queried based on the target virtual address and a target process device number. The mapping table includes a correspondence between at least one virtual address, at least one physical address, and at least one process identification. If a first physical address corresponding to the target virtual address and the target process identification exists in the mapping table, and the first physical address is included in a physical address range of the SCM, it means that the first physical address is a memory pointer, and a memory page to be accessed by the first memory access instruction is in the SCM. On this basis, data of a target memory page corresponding to the first physical address is prefetched to the DRAM.

It can be learned from the foregoing technical solution that this application has the following advantages:
A memory access instruction is identified and analyzed to determine whether the memory access instruction corresponds to a memory pointer and determine whether an indicated accessed area is in the storage class memory. When a memory pointer of the storage class memory is indicated, data prefetching is performed to prefetch, to the dynamic random access memory, data of an accessed target memory page. In other words, a physical address corresponding to the memory access instruction is identified, and a memory page to be accessed is promoted to the dynamic random access memory, so that accuracy of the data prefetching and acceleration performance of subsequent data processing are improved.

In a possible implementation, the mapping table may include a page table, or the mapping table includes the page table and a translation lookaside buffer (translation lookaside buffer, TLB) table. An existing translation lookaside buffer table in a processor may be reused as the translation lookaside buffer table. Alternatively, the translation lookaside buffer table may be a translation lookaside buffer table that is separately disposed. This is not specifically limited herein. When the mapping table includes the page table and the translation lookaside buffer table, a procedure of querying the mapping table includes: querying the translation lookaside buffer table based on the target virtual address and the target process identification; and if the translation lookaside buffer table does not include the first physical address, querying the page table based on the target virtual address and the target process identification.

There are a plurality of possibilities for the mapping table. When the mapping table includes the page table and the translation lookaside buffer table, there are also a plurality of possibilities for implementing the translation lookaside buffer table. In this way, implementations of the technical solution of this application are enriched, and flexibility and practicability of the technical solution are improved. In addition, when the mapping table includes the page table and the translation lookaside buffer table, the translation lookaside buffer table is preferentially queried, and an advantage of a high speed of querying the translation lookaside buffer table is used, so that a speed of data processing is increased.

In a possible implementation, prefetching, to the dynamic random access memory, the data of the target memory page corresponding to the first physical address includes: prefetching the data of the target memory page to a second physical address. The second physical address is included in a physical address range corresponding to the dynamic random access memory. On this basis, a physical address corresponding to the target virtual address and a target process number changes, that is, a correspondence changes. Therefore, the mapping table needs to be updated. In other words, the correspondence between the target virtual address, the target process identification, and the first physical address in the mapping table, need to be updated to a correspondence between the target virtual address, the target process identification, and the second physical address.

In a possible implementation, a manner of updating the mapping table varies with a type of the mapping table. If the mapping table includes the page table, the correspondence between the target virtual address, the target process identification, and the first physical address in the page table are updated to the correspondence between the target virtual address, the target process identification, and the second physical address. If the mapping table includes the page table and the translation lookaside buffer table, in addition to updating the correspondence between the target virtual address, the target process identification, and the first physical address in the page table to the correspondence between the target virtual address, the target process identification, and the second physical address, the correspondence between the target virtual address, the target process identification, and the second physical address further need to be stored into the translation lookaside buffer table.

After data in the storage class memory is prefetched to the dynamic random access memory, a correspondence in the mapping table is further updated, so that the mapping table adapts to an actual data processing procedure. A specific update manner varies with the type of the mapping table. In addition to enriching implementations of the solution, it can also be ensured that a subsequent access operation can be performed smoothly, so that implementability of the technical solution is improved.

In a possible implementation, before obtaining and querying the mapping table, the mapping table further needs to be constructed. Specifically, the correspondence between the at least one virtual address, the at least one process identification, and the at least one physical address can be obtained. The mapping table is constructed based on the correspondence between the at least one virtual address, the at least one process identification, and the at least one physical address.

A storage class memory controller can obtain the correspondence between the at least one virtual address, the at least one process identification, and the at least one physical address, and construct the mapping table based on the correspondence. This provides technical support for implementation of the technical solution of this application, and improves implementability of the technical solution of this application.

According to a second aspect, this application provides a data processing apparatus. The data processing apparatus includes modules configured to perform the data processing method according to any one of the first aspect or the possible implementations of the first aspect.

According to a third aspect, a chip is provided. The chip includes a processing unit and a power supply circuit. The power supply circuit supplies power to the processing unit. The processing unit is configured to implement the method according to any one of the first aspect and the possible implementations of the first aspect.

According to a fourth aspect, a computer-readable storage medium is provided. The computer-readable storage medium stores instructions, and when the instructions are run on a processor, the method according to any one of the first aspect and the possible implementations of the first aspect is implemented.

According to a fifth aspect, a computer program product is provided. When the computer program product is executed on a processor, the method according to any one of the first aspect and the possible implementations of the first aspect is implemented.

Beneficial effects in the second aspect to the fifth aspect are similar to those in any one of the first aspect and the possible implementations of the first aspect. Details are not described herein again.

Based on the implementations provided in the foregoing aspects, implementations in this application may be further combined to provide more implementations.

### BRIEF DESCRIPTION OF DRAWINGS

FIG. 1a is a diagram of a system architecture to which this application is applied;
FIG. 1b is a diagram of another system architecture to which this application is applied;
FIG. 2 is a schematic flowchart of a data processing method according to this application;
FIG. 3 is another schematic flowchart of a data processing method according to this application;
FIG. 4 is another schematic flowchart of a data processing method according to this application;
FIG. 5 is a diagram of a structure of a data processing apparatus according to this application;
FIG. 6 is a diagram of a structure of a chip according to this application; and
FIG. 7 is a diagram of a data processing system according to this application.

### DESCRIPTION OF EMBODIMENTS

To improve accuracy of data prefetching, this application provides a data processing method and apparatus, a chip, and a computer-readable storage medium. A memory access instruction is identified and analyzed to determine whether the memory access instruction corresponds to a memory pointer and determine whether an indicated accessed area is in a storage class memory. When a memory pointer of a storage class memory is indicated, data prefetching is performed to prefetch, to a dynamic random access memory, data of an accessed target memory page. In other words, a physical address corresponding to the memory access instruction is identified, and a memory page to be accessed is promoted to the dynamic random access memory, so that accuracy of the data prefetching and acceleration performance of subsequent data processing are improved.

The following describes embodiments of this application with reference to the accompanying drawings.

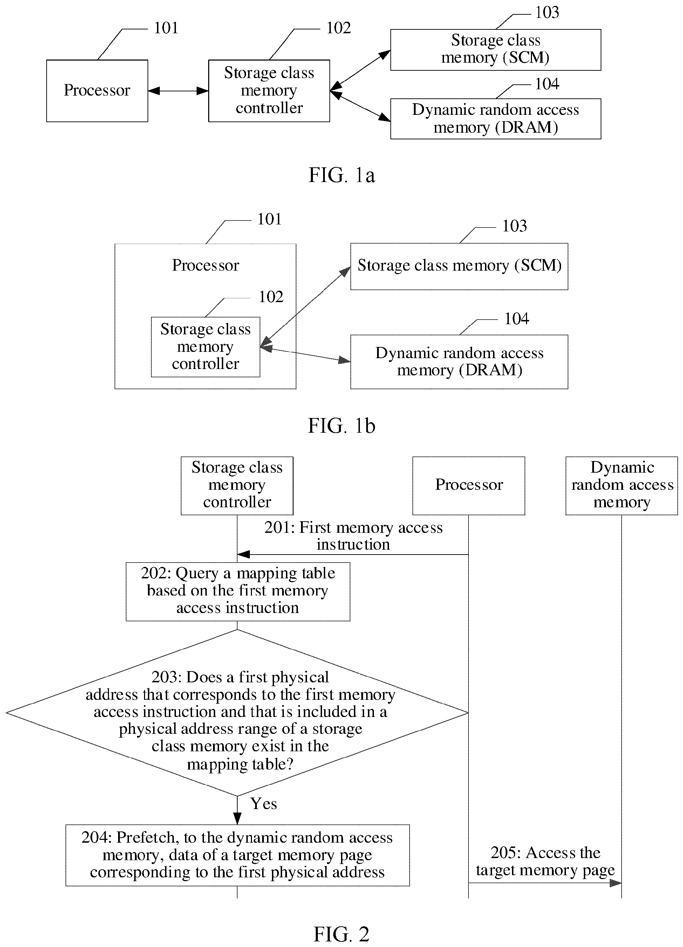

First, refer to FIG. 1a and FIG. 1b. FIG. 1a and FIG. 1b each are a diagram of a system architecture according to this application.

As shown in FIG. 1a, a data processing method provided in embodiments of this application is applied to a hybrid memory system. The hybrid memory system includes a plurality of types of memories, for example, a storage class memory 103 and a dynamic random access memory 104. The storage class memory 103 is a physical computer memory, and the storage class memory 103 considers a non-volatile memory as the dynamic random access memory 104. In terms of a read/write speed and data processing, the dynamic random access memory 104 has higher performance than the storage class memory 103.

In a procedure of the data processing, a processor 101 obtains a memory access instruction, and delivers the memory access instruction to a storage class memory controller 102. In this embodiment of this application, the storage class memory controller 102 parses the memory access instruction, and performs a corresponding operation, to access data corresponding to the memory access instruction in the storage class memory 103 or the dynamic random access memory 104. A specific procedure is described in detail below, and details are not described herein.

It should be noted that FIG. 1a is merely a diagram of a system architecture, and does not constitute a limitation on a system to which this embodiment of this application is applied. In the embodiment shown in FIG. 1a, the storage class memory controller 102 is decoupled from the processor 101. In actual application, as shown in FIG. 1b, the storage class memory controller 102 may be further coupled to the processor 101. This is not specifically limited herein.

It should be noted that the storage class memory 103 has a plurality of memory forms, and may be a data center persistent memory (data center persistent memory, DC PMem), for example, an AEP, or another storage class memory, for example, a phase change memory (phase change memory, PCM), a persistent memory (persistent memory, PMem), or a non-volatile memory (non-volatile memory, NVM). This is not specifically limited herein.

It should be noted that the dynamic random access memory 104 has a plurality of memory forms, and may be a synchronous dynamic access memory (synchronous dynamic random access memory, SDRAM), or a double rate (double data rate, DDR). In addition, there may alternatively be another type of memory form, for example, a remote direct memory access (remote direct memory access, RDMA) memory, or an out-of-node extended memory (memory fabric). This is not specifically limited herein.

It should be noted that, in this embodiment of this application, there are a plurality of possible bus protocols for establishing connections between the storage class memory controller 102 and the processor 101, the storage class memory 103, and the dynamic random access memory 104, for example, a dual in-line memory module (dual in-line memory module, DIMM) bus protocol, a DDR-T, an open interconnect protocol (compute express link, CXL), an open coherent accelerator processor interface (open coherent accelerator processor interface, OpenCAPI) protocol, a Gen-Z protocol, and a cache coherent interconnect (cache coherent interconnect for accelerators, CCIX) protocol. In addition, there may be another bus protocol, for example, InfiniBand/RoCE, QuickPath, or NVLink. This is not specifically limited herein.

The data processing method provided in embodiments of this application may be applied to the architecture described above. The following provides detailed descriptions with reference to diagrams. FIG. 2 is a schematic flowchart of a data processing method according to this application. The method includes at least following steps.

201: A storage class memory controller obtains a first memory access instruction from a processor.

After obtaining the first memory access instruction, the processor delivers the first memory access instruction to the storage class memory controller. The storage class memory controller analyzes the first memory access instruction, determines whether an accessed area indicated by the first memory access instruction is in a storage class memory or a dynamic random access memory in a hybrid memory area, and determines whether a memory address (that is, a physical address) corresponding to the first memory access instruction is a memory pointer.

The memory pointer means that data that is actually to be accessed is not stored in the memory address, but a memory block with a large data amount is indicated, where the data amount of the memory block is greater than memory space occupied by the memory pointer. Content of the memory pointer is usually an address of a memory page, and an object pointed to is a large block of memory space that is applied for in an early stage of memory allocation.

In addition, the first memory access instruction carries a target virtual address and a target process identification. The target process identification indicates a process corresponding to the first memory access instruction, so that the storage class memory controller can distinguish between memory access instructions corresponding to different service processes, and an access error can also be avoided when a plurality of services are concurrent.

202: The storage class memory controller queries a mapping table based on the first memory access instruction.

After obtaining the first memory access instruction, the storage class memory controller queries the mapping table based on the target virtual address and the target process identification that are included in the first memory access instruction, to determine whether the accessed area indicated by the first memory access instruction is in the storage class memory or the dynamic random access memory in the hybrid memory area, and determine whether the physical address corresponding to the first memory access instruction is the memory pointer. The mapping table includes a correspondence between at least one virtual address, at least one process identification, and at least one physical address.

In embodiments of this application, there are a plurality of cases. The mapping table may include a page table, or may include the page table and a translation lookaside buffer (translation lookaside buffer, TLB) table. For different cases, a table query manner varies. The following separately describes possible cases.

### (1) The mapping table includes the page table.

In this case, the storage class memory controller queries the page table based on the target virtual address and the target process identification. The page table may be stored in a control register (control register, CR). Specifically, the storage class memory controller may send a query instruction to a CR controller. The query instruction carries the target virtual address and the target process identification, and the query instruction instructs to query a physical address corresponding to the target virtual address and the target process identification.

The correspondence between the at least one virtual address, the at least one process identification, and the at least one physical address is stored in the page table. The at least one virtual address is in one-to-one correspondence with the at least one physical address. Each process identification may correspond to one or more virtual addresses and physical addresses. This is because data corresponding to one service process may be stored in a plurality of storage areas.

### (2) The mapping table includes the page table and the translation lookaside buffer table.

It is considered that performance (mainly a query speed) of the translation lookaside buffer table is higher than that of the page table. Therefore, when the mapping table includes the page table and the translation lookaside buffer table, the storage class memory controller first queries the translation lookaside buffer table, and if a first physical address that meets a condition cannot be found from the translation lookaside buffer table, queries the page table. The condition that the first physical address needs to meet is described in step 203, and details are not described herein.

It should be noted that an existing translation lookaside buffer table in a processor may be reused as the translation lookaside buffer table in this embodiment of this application, that is, a function of the existing translation lookaside buffer table is extended, so that the translation lookaside buffer table can store a correspondence. Alternatively, the translation lookaside buffer table may be a translation lookaside buffer table that is separately disposed. In this case, the translation lookaside buffer table that is separately disposed may be referred to as a mini translation lookaside buffer (miniTLB) table, to be distinguished from the existing translation lookaside buffer table in the processor. A specific implementation of the translation lookaside buffer table may be selected based on an actual application requirement, and is not specifically limited herein.

In embodiments of this application, there are a plurality of possibilities for the mapping table. When the mapping table includes the page table and the translation lookaside buffer table, there are also a plurality of possibilities for implementing the translation lookaside buffer table. In this way, implementations of the technical solution of this application are enriched, and flexibility and practicability of the technical solution are improved. In addition, when the mapping table includes the page table and the translation lookaside buffer table, the translation lookaside buffer table is preferentially queried, and an advantage of a high speed of querying the translation lookaside buffer table is used, so that a speed of data processing is increased.

203: The storage class memory controller determines whether a first physical address that corresponds to the first memory access instruction and that is included in a physical address range of the storage class memory exists in the mapping table, and if the first physical address exists, performs step 204.

The first physical address that meets the condition and that is mentioned above is a physical address that is in the mapping table, that corresponds to the first memory access instruction, and that is included in the physical address range of the storage class memory. Corresponding to the first memory access instruction means corresponding to the target virtual address and the target process identification that are carried in the first memory access instruction.

If such a first physical address exists in the mapping table, it means that the first physical address is a memory pointer, and the first memory access instruction indicates that an accessed data area is in the storage class memory. In other words, data to be accessed is not only of a large data amount, but also stored in a storage class memory with low processing performance.

204: Prefetch, to the dynamic random access memory, data of the target memory page corresponding to the first physical address.

When the storage class memory controller determines that the first physical address that corresponds to the first memory access instruction and that is included in the physical address range of the storage class memory exists in the mapping table, the storage class memory controller prefetches, to the dynamic random access memory, the data of the target memory page corresponding to the first physical address. The target memory page corresponding to the first physical address may be one memory page stored in the storage class memory, or may be a plurality of memory pages. This is not specifically limited herein.

Memory page prefetching is performed because data processing performance of the storage class memory is lower than that of the dynamic random access memory, and an amount of data to be accessed by the first memory access instruction is large. If prefetching is not performed, the processor accesses data in the storage class memory, and a processing speed is slow and performance is poor. This problem can be resolved through the prefetching.

Prefetching, to the dynamic random access memory, the target memory page corresponding to the first physical address may also be understood as identifying the target memory page to be accessed as a hot memory page, and identifying data in the memory page as hot data. Prefetching the data of the target memory page to the dynamic random access memory actually means prefetching the data of the target memory page to a second physical address. The second physical address is included in a physical address range corresponding to the dynamic random access memory. In other words, a storage location of the data of the target memory page is changed.

In embodiments of this application, the memory access instruction is identified and analyzed to determine whether the memory access instruction corresponds to a memory pointer and determine whether an indicated accessed area is in the storage class memory. When a memory pointer of the storage class memory is indicated, data prefetching is performed to prefetch, to the dynamic random access memory, data of an accessed target memory page. In other words, a physical address corresponding to the memory access instruction is identified, and a memory page to be accessed is promoted to the dynamic random access memory, so that accuracy of the data prefetching and acceleration performance of subsequent data processing are improved.

In some optional implementations, before querying the mapping table, that is, before step 202, the storage class memory controller constructs the mapping table. The storage class memory controller obtains the correspondence between the at least one virtual address, the at least one process identification, and the at least one physical address, and constructs the mapping table based on the correspondence between the at least one virtual address, the at least one process identification, and the at least one physical address. Regardless of whether the mapping table includes the page table or includes the page table and the translation lookaside buffer table, in an initialization phase (that is, when an operating system running on the processor allocates new memory space), a correspondence between a virtual address, a physical address, and a process identification is explicitly configured for the storage class memory controller. The physical address herein indicates the memory pointer when being included in the physical address range of the storage class memory. The storage class memory controller constructs the page table based on the correspondence, and places an address of the page table in the CR register.

In embodiments of this application, the storage class memory controller can obtain the correspondence between the at least one virtual address, the at least one process identification, and the at least one physical address, and construct the mapping table based on the correspondence. This provides technical support for implementation of the technical solution of this application, and improves implementability of the technical solution of this application.

In some optional implementations, the storage class memory controller further updates the mapping table. Specifically, after the data of the target memory page corresponding to the first physical address is prefetched to the dynamic random access memory, that is, after step 204, the physical address corresponding to the target virtual address and the target process identification changes. Therefore, the mapping table needs to be updated.

An operation of prefetching, to the dynamic random access storage by the memory storage class memory controller, the data of the target memory page corresponding to the first physical address is specifically as follows: first releasing a correspondence between the first physical address and both the target virtual address and the target process identification that are included in the first memory access instruction; and then establishing a correspondence between the second physical address and both the target virtual address and the target process identification that are included in the first memory access instruction. An operation of releasing the correspondence between the first physical address and both the target virtual address and the target process identification that are included in the first memory access instruction may be referred to as an unmap operation. An operation of establishing the correspondence between the second physical address and both the target virtual address and the target process identification that are included in the first memory access instruction may be referred to as a map operation.

Because there are a plurality of possibilities for the mapping table, there are also a plurality of possibilities for updating the mapping table. The following separately describes the possibilities.

### (1) The mapping table includes the page table.

In this case, the first physical address corresponding to the target virtual address and the target process identification in the page table is updated to the second physical address.

### (2) The mapping table includes the page table and the translation lookaside buffer table.

In this case, the first physical address corresponding to the target virtual address and the target process identification in the page table needs to be updated to the second physical address. In addition, because the translation lookaside buffer table does not store the correspondence in the initialization phase, after prefetching is performed, a newly established correspondence is stored into the translation lookaside buffer table. In correspondence to the foregoing embodiment, a correspondence between the target virtual address, the target process identification, and the second physical address are stored into the translation lookaside buffer table.

In embodiments of this application, after data in the storage class memory is prefetched to the dynamic random access memory, a correspondence in the mapping table is further updated, so that the mapping table adapts to an actual data processing procedure. A specific update manner varies with the type of the mapping table. In addition to enriching implementations of the solution, it can also be ensured that a subsequent access operation can be performed smoothly, so that implementability of the technical solution is improved.

After data prefetching is performed, the processor may directly perform access from a dynamic random access memory side when performing subsequent page access. In other words, after step 204, step 205 may be further performed. The processor accesses the target memory page by using the dynamic random access memory.

In step 204, the storage class memory controller prefetches, to the dynamic random access memory, the data of the target memory page corresponding to the first physical address, and accessed data that corresponds to the first memory access instruction is located in the dynamic random access memory. Therefore, the processor accesses the target memory page by accessing a random access memory. Specifically, after prefetching is performed, a physical address corresponding to the target memory page changes from the first physical address to the second physical address, and the processor actually accesses data of the second physical address.

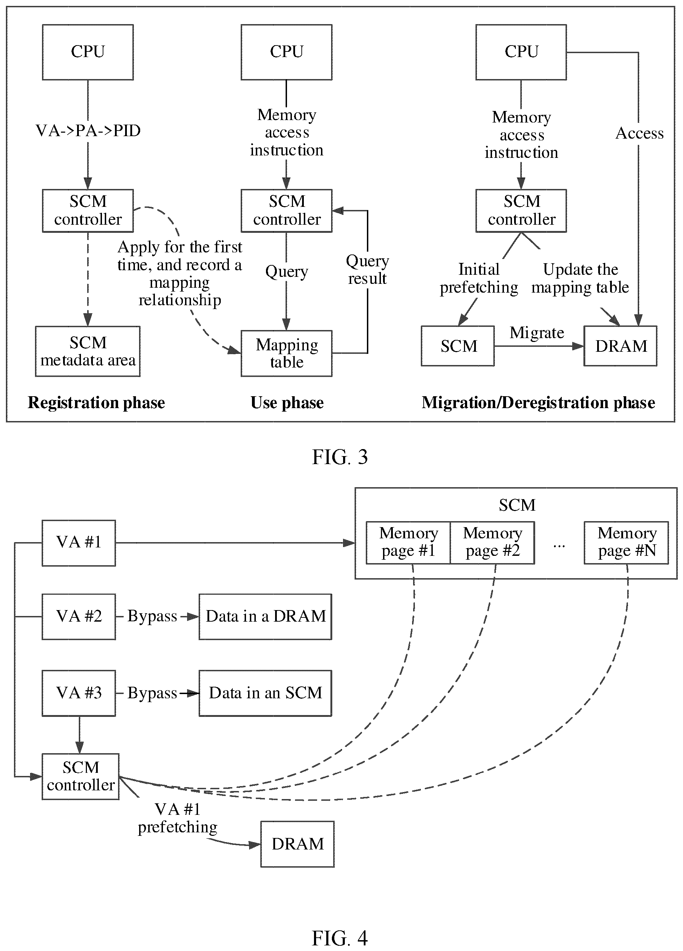

It should be noted that in FIG. 2, the storage class memory controller is used as a main execution entity, and a series of operations (including the table querying, the data prefetching, and the like) performed by the storage class memory controller after the storage class memory controller obtains the memory access instruction are described. FIG. 3 to be described below focuses on a change procedure of the correspondence between the virtual address, the physical address, and a target process number from a perspective of registration, use, and migration of the correspondence. In other words, FIG. 2 and FIG. 3 both describe the data processing procedure, and focus points are slightly different. Refer to FIG. 3 below. FIG. 3 is a schematic flowchart of a data processing method according to this application.

As shown in FIG. 3, in a registration phase, an SCM controller initiates memory application. A processor (central processing unit, CPU) allocates new memory space and explicitly configures a correspondence of PA->VA->PID to the SCM controller. The SCM controller records the correspondence and constructs a mapping table based on the correspondence.

In a use phase, that is, after the CPU delivers a memory access instruction to the SCM controller, the SCM controller queries the mapping table based on the VA and the PID that are carried in the memory access instruction, to determine whether a physical address corresponding to the memory access instruction is a memory pointer and is included in a physical address range of an SCM. The memory access instruction instructs to access data in a hybrid memory, and may be specifically a load (load) instruction or a store (store) instruction. This is not specifically limited herein.

When the SCM controller determines that the physical address corresponding to the memory access instruction is the memory pointer and is included in the physical address range of the SCM, the SCM controller releases a previous correspondence of the physical address and initiates prefetching to enable the physical address to point to a memory page, migrate the memory page and data in the memory page to the DRAM, and then refresh a corresponding page table entry, that is, establish a new correspondence of PA->VA->PID. On this basis, when performing subsequent page access, the CPU may directly access from a DRAM side.

In the foregoing descriptions, a case in which a physical address that meets a condition exists in the mapping table, that is, a case in which a physical address that corresponds to a virtual address and a process identification in a memory access instruction and that is included in a physical address range of the SCM exists in the mapping table is described. However, in actual application, the SCM controller may further process another type of memory access instruction. The following provides descriptions with reference to a diagram.

FIG. 4 is a schematic flowchart of a data processing method according to this application.

As shown in FIG. 4, a physical address corresponding to VA #1 indicates a memory page in an SCM. In other words, the physical address corresponding to VA #1 is a memory pointer in the SCM. In embodiments of this application, an SCM controller can identify the memory pointer, and prefetch, to a DRAM, data of a memory page corresponding to the memory pointer. A specific procedure is described above, and details are not described herein again. It should be noted that a process identification is omitted in FIG. 4. In actual application, the process identification still needs to be used to determine whether the physical address is the memory pointer.

The SCM controller can further identify a virtual address corresponding to another data type. For example, the SCM controller may identify VA #2 indicating data stored in the DRAM, and/or VA #3 indicating data stored in the SCM. In the former case, data is already located in the DRAM with good performance, and does not need to be migrated. In the latter case, what is indicated is the data itself, not the memory pointer. A data amount of the data is usually small, and is 1 byte. Whether or not to perform prefetching has little impact on a data processing procedure. To save computing resources, the data may not be prefetched.

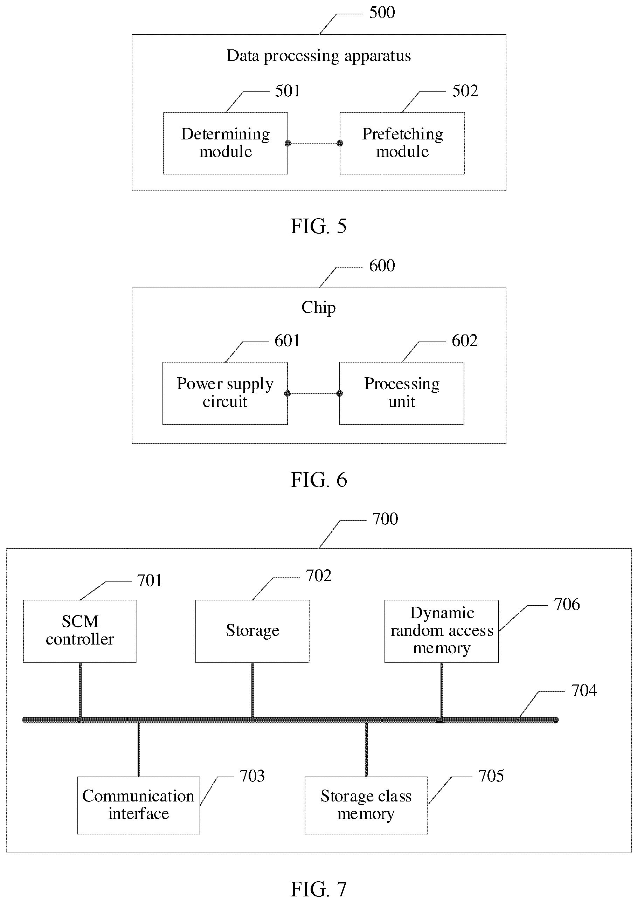

The foregoing describes in detail the data processing method provided in this application with reference to FIG. 2 to FIG. 4. The following describes, with reference to FIG. 5 to FIG. 6, a data processing apparatus and a chip provided in embodiments of this application of the present invention.

FIG. 5 is a diagram of a structure of a data processing apparatus according to this application. As shown in FIG. 5, the data processing apparatus 500 includes a determining module 501 and a prefetching module 502.

The determining module 501 is configured to: obtain a first memory access instruction, where the first memory access instruction carries a target virtual address and a target process identification, and the target process identification indicates a process corresponding to the first memory access instruction; and query a mapping table based on the target virtual address and the target process identification, where the mapping table includes a correspondence between at least one virtual address, at least one process identification, and at least one physical address.

The prefetching module 502 is configured to: if a first physical address corresponding to the target virtual address and the target process identification exists in the mapping table, and the first physical address is included in a physical address range corresponding to a storage class memory, prefetch, to a dynamic random access memory, data of a target memory page corresponding to the first physical address.

It should be understood that the data processing apparatus 500 in this embodiment of this application of the present invention may be implemented by using a central processing unit (central processing unit, CPU), or may be implemented by using an application-specific integrated circuit (application-specific integrated circuit, ASIC), or may be implemented by using a programmable logic device (programmable logic device, PLD). The PLD may be a complex programmable logic device (complex programmable logic device, CPLD), a field programmable gate array (field programmable gate array, FPGA), generic array logic (generic array logic, GAL), a data processing unit (data processing unit, DPU), a system on chip (system on chip, SoC), or any combination thereof. Alternatively, when the data processing methods shown in FIG. 2 to FIG. 4 may be implemented by using software, the data processing apparatus 500 and modules thereof may be software modules.

In some optional implementations, the mapping table includes a page table, or the mapping table includes the page table and a translation lookaside buffer table. If the mapping table includes the page table and the translation lookaside buffer table, the determining module 501 is specifically configured to: query the translation lookaside buffer table based on the target virtual address and the target process identification; and if the translation lookaside buffer table does not include the first physical address, query the page table based on the target virtual address and the target process identification.

In some optional implementations, the prefetching module 502 is specifically configured to prefetch the data of the target memory page to a second physical address. The second physical address is included in a physical address range corresponding to the dynamic random access memory.

The determining module 501 is further configured to update a correspondence between the target virtual address, the target process identification, and the first physical address in the mapping table to a correspondence between the target virtual address, the target process identification, and the second physical address.

In some optional implementations, the determining module 501 is specifically configured to: if the mapping table includes the page table and the translation lookaside buffer table, update the correspondence between the target virtual address, the target process identification, and the first physical address in the page table to the correspondence between the target virtual address, the target process identification, and the second physical address; and store the correspondence between the target virtual address, the target process identification, and the second physical address into the translation lookaside buffer table.

In some optional implementations, the determining module 501 is further configured to: obtain the correspondence between the at least one virtual address, the at least one process identification, and the at least one physical address; and construct the mapping table based on the correspondence between the at least one virtual address, the at least one process identification, and the at least one physical address.

The data processing apparatus 500 according to this embodiment of this application may correspondingly perform the method described in embodiments of this application of the present invention. The foregoing and other operations and/or functions of units in the data processing apparatus 500 are respectively used to implement corresponding procedures performed by the SCM controller in the methods in FIG. 2 to FIG. 4. For brevity, details are not described herein again.

FIG. 6 is a diagram of a structure of a chip according to this application.

As shown in FIG. 6, the chip 600 includes a power supply circuit 601 and a processing unit 602. The power supply circuit 601 supplies power to the processing unit 602. The processing unit 602 is configured to implement the methods shown in FIG. 1a to FIG. 4. Details are not described herein again.

This application further provides a data processing system. FIG. 7 is a diagram of a structure of a data processing system 700 according to this application.

As shown in FIG. 7, the data processing system 700 includes an SCM controller 701, a storage 702, a communication interface 703, a bus 704, a storage class memory 705, and a dynamic random access memory 706. The SCM controller 701, the storage 702, the communication interface 703, the storage class memory 705, and the dynamic random access memory 706 communicate with each other via the bus 704, or may communicate with each other through wireless transmission or another means. The storage 702 is configured to store instructions. The SCM controller 701 is configured to execute the instructions stored in the storage 702. The storage 702 stores program code. The SCM controller 701 may invoke the program code stored in the storage 702 to perform the following operations:
obtaining a first memory access instruction, where the first memory access instruction carries a target virtual address and a target process identification, and the target process identification indicates a process corresponding to the first memory access instruction; querying a mapping table based on the target virtual address and the target process identification, where the mapping table includes a mapping relationship between at least one virtual address, at least one process identification, and at least one physical address; and if a first physical address corresponding to the target virtual address and the target process identification exists in the mapping table, and the first physical address is included in a physical address range corresponding to the storage class memory, prefetching, to the dynamic random access memory, data of a target memory page corresponding to the first physical address. In addition, corresponding procedures performed by the SCM controller in the methods in FIG. 2 to FIG. 4 can also be implemented. For brevity, details are not described herein again.

It should be understood that, in this embodiment of this application, the SCM controller 701 may be a CPU, or the SCM controller 701 may be another digital signal processor (digital signal processor, DSP), an application-specific integrated circuit (ASIC), a field programmable gate array (FPGA), or another programmable logic device, a discrete gate or transistor logic device, a discrete hardware component, or the like.

The storage 702 may be a magnetic disk or a hard disk, and provides instructions and data for the SCM controller 701. The storage 702 may further include a non-volatile random access memory. For example, the storage 702 may further store information about a device type. The storage 702 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory.

The dynamic random access memory 706 has a plurality of types, for example, a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or the like. This is not specifically limited herein.

In addition to a data bus, the bus 704 may further include a power bus, a control bus, a status signal bus, and the like. However, for clear description, various types of buses in the figure are marked as the bus 704.

The bus 704 may be a peripheral component interconnect express (Peripheral Component Interconnect Express, PCIe) bus, an extended industry standard architecture (extended industry standard architecture, EISA) bus, a unified bus (unified bus, Ubus, or UB), a computer express link (compute express link, CXL), a cache coherent interconnect (cache coherent interconnect for accelerators, CCIX) protocol, or the like. The bus 704 may be classified into an address bus, the data bus, the control bus, or the like.

It should be understood that the SCM controller 701 in this embodiment of this application may correspond to the data processing apparatus 500 in embodiments of this application, and may correspond to a corresponding entity in the methods in embodiments of this application. In addition, the foregoing and other operations and/or functions of modules in the data processing apparatus 500 are respectively used to implement corresponding procedures of methods in FIG. 1a to FIG. 4. For brevity, details are not described herein again.

All or some of the foregoing embodiments may be implemented using software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on a computer, all or some of procedures or functions in embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The foregoing descriptions are merely specific implementations of this application of the present invention. Any variation or replacement readily figured out by a person skilled in the art based on the specific implementations provided in this application of the present invention shall fall within the protection scope of this application of the present invention.

## Claims

1. A data processing method, wherein the method is applied to a hybrid memory system, the hybrid memory system comprises a storage class memory and a dynamic random access memory, and the method comprises:
obtaining a first memory access instruction, wherein the first memory access instruction carries a target virtual address and a target process identification, and the target process identification indicates a process corresponding to the first memory access instruction;
querying a mapping table based on the target virtual address and the target process identification, wherein the mapping table comprises a correspondence between at least one virtual address, at least one process identification, and at least one physical address; and
if a first physical address corresponding to the target virtual address and the target process identification exists in the mapping table, and the first physical address is comprised in a physical address range corresponding to the storage class memory, prefetching, to the dynamic random access memory, data of a target memory page corresponding to the first physical address.

2. The method according to claim 1, wherein the mapping table comprises a page table, or the mapping table comprises the page table and a translation lookaside buffer table; and
if the mapping table comprises the page table and the translation lookaside buffer table, querying the mapping table based on the target virtual address and the target process identification comprises:
querying the translation lookaside buffer table based on the target virtual address and the target process identification; and
if the translation lookaside buffer table does not comprise the first physical address, querying the page table based on the target virtual address and the target process identification.

3. The method according to claim 1 or 2, wherein prefetching, to the dynamic random access memory, the data of the target memory page corresponding to the first physical address comprises:
prefetching the data of the target memory page to a second physical address, wherein the second physical address is comprised in a physical address range corresponding to the dynamic random access memory; and
the method further comprises:
updating a correspondence between the target virtual address, the target process identification, and the first physical address in the mapping table to a correspondence between the target virtual address, the target process identification, and the second physical address.

4. The method according to claim 3, wherein updating the correspondence between the target virtual address, the target process identification, and the first physical address in the mapping table to the correspondence between the target virtual address, the target process identification, and the second physical address comprises:
if the mapping table comprises the page table and the translation lookaside buffer table, updating the correspondence between the target virtual address, the target process identification, and the first physical address in the page table to the correspondence between the target virtual address, the target process identification, and the second physical address; and
the method further comprises:
storing the correspondence between the target virtual address, the target process identification, and the second physical address into the translation lookaside buffer table.

5. The method according to any one of claims 1 to 4, wherein before querying the mapping table, the method further comprises:
obtaining the correspondence between the at least one virtual address, the at least one process identification, and the at least one physical address; and
constructing the mapping table based on the correspondence between the at least one virtual address, the at least one process identification, and the at least one physical address.

6. A data processing apparatus, comprising:
a determining module, configured to obtain a first memory access instruction, wherein the first memory access instruction carries a target virtual address and a target process identification, and the target process identification indicates a process corresponding to the first memory access instruction, wherein
the determining module is further configured to query a mapping table based on the target virtual address and the target process identification, wherein the mapping table comprises a correspondence between at least one virtual address, at least one process identification, and at least one physical address; and
the prefetching module, configured to: if a first physical address corresponding to the target virtual address and the target process identification exists in the mapping table, and the first physical address is comprised in a physical address range corresponding to the storage class memory, prefetch, to the dynamic random access memory, data of a target memory page corresponding to the first physical address.

7. The apparatus according to claim 6, wherein the mapping table comprises a page table, or the mapping table comprises the page table and a translation lookaside buffer table; and
if the mapping table comprises the page table and the translation lookaside buffer table, the determining module is specifically configured to:
query the translation lookaside buffer table based on the target virtual address and the target process identification; and
if the translation lookaside buffer table does not comprise the first physical address, query the page table based on the target virtual address and the target process identification.

8. The apparatus according to claim 6 or 7, wherein the prefetching module is specifically configured to prefetch, to a second physical address, the data of the target memory page, wherein the second physical address is comprised in a physical address range corresponding to the dynamic random access memory; and
the determining module is further configured to update a correspondence between the target virtual address, the target process identification, and the first physical address in the mapping table to a correspondence between the target virtual address, the target process identification, and the second physical address.

9. The apparatus according to claim 8, wherein the determining module is specifically configured to: if the mapping table comprises the page table and the translation lookaside buffer table, update the correspondence between the target virtual address, the target process identification, and the first physical address in the page table to the correspondence between the target virtual address, the target process identification, and the second physical address; and
the determining module is further configured to store the correspondence between the target virtual address, the target process identification, and the second physical address into the translation lookaside buffer table.

10. The apparatus according to any one of claims 6 to 9, wherein the determining module is further configured to:
obtain the correspondence between the at least one virtual address, the at least one process identification, and the at least one physical address; and
construct the mapping table based on the correspondence between the at least one virtual address, the at least one process identification, and the at least one physical address.

11. A chip, comprising a processing unit and a power supply circuit, wherein
the power supply circuit supplies power to the processing unit; and
the processing unit is configured to perform the method according to any one of claims 1 to 5.

12. A computer-readable storage medium, wherein the computer-readable storage medium stores instructions, and when the instructions are run on a processor, the method according to any one of claims 1 to 5 is implemented.
